# EUROPEAN PATENT SPECIFICATION

(11) **EP 4 383 481 B1**
(45) Date of publication and mention of the grant of the patent: **06.05.2026**
(21) Application number: 22852353.6
(22) Date of filing: 05.08.2022
(51) Int. Cl.: H01R 31/06, H01R 13/02, H01R 13/40, H01R 13/629, B60L 53/18, B60L 53/16, H01R 4/20, H01R 4/56, H01R 13/11

(54) **CHARGING SOCKET AND VEHICLE**
LADEDOSE UND FAHRZEUG
PRISE DE CHARGE ET VÉHICULE

(30) Priority: 06.08.2021 CN 202110903678
(43) Date of publication of application: 12.06.2024
(73) Proprietor: Changchun Jetty Automotive Technology Co., Ltd., Changchun, Jilin 130000 (CN)
(72) Inventor: WANG, Chao, Changchun, Jilin 130000 (CN)
(74) Representative: Habermann, Hruschka & Schnabel
(86) International application number: PCT/CN2022/110615
(87) International publication number: WO 2023/011642

(56) References cited:
- CN-A- 108 879 163
- CN-A- 112 436 343
- CN-A- 112 436 343
- CN-A- 113 173 087
- CN-A- 113 173 087
- CN-A- 113 725 652
- CN-U- 206 471 532
- CN-U- 206 992 349
- CN-U- 206 992 349
- CN-U- 208 093 815
- CN-U- 208 093 815
- CN-U- 208 889 901
- CN-U- 209 298 410
- CN-U- 209 298 410
- CN-U- 209 448 082
- CN-U- 209 448 082
- CN-U- 210 443 699
- DE-T5- 112014 004 814
- JP-A- 2017 224 456

## Description

### RLEATED APPLICATION

The present disclosure claims the priority of the Chinese patent submitted on August 06, 2021, with the application number 202110903678.0 and the patent title "charging socket and vehicle".

### TECHNICAL FIELD

The present disclosure relates to the field of connection of electrical connection elements, particularly to a charging socket and an vehicle.

### BACKGROUND

With the gradual popularity of electric vehicles, market demands for charging plugs and charging sockets are gradually increasing. In prior arts, a charging socket in a charging system includes a charging terminal and a cable, the charging terminal and the cable are connected inside the charging socket, the charging terminal is fixed on a charging socket body, and the cable is connected with the charging terminal. Due to excessive times of insertion and removal, or due to a short circuit, some charging terminals in the charging socket will be damaged. When repairing and replacing a charging terminal, all the cables of the charging socket need to be removed from a vehicle body first, then a rear cover of the charging socket is detached, the charging terminal connected to the cable is taken out. A charge terminal, plug bush that charges, a fill electric gun and a charging seat are known from the prior art, for example from CN206992349U. A ladeverbinder is known from the prior art, for example from DE112014004814T5. A replaceable terminal, a charging socket and an electric automobile are known from the prior art, for example from CN209298410U.A welding mode is generally adopted for the charging terminal and the cable, thus it needs to cut off a damaged electric connection device; since there is no repair allowance for setting a cable length, the cable may need to be replaced, outer sheath and tapes of the entire cable need to be removed, then the charging socket can be repaired, the whole process needs to consume a lot of manpower and time, which seriously affects the efficiency of after-sales repair, hence in the prior arts, a new solution is urgently needed to solve said problem. CN113173087A discloses a charging socket comprising: a charging socket body, a charging terminal, a shield member and a cable , wherein the shield member comprises a detachable structure and a fixed end which are connected in sequence, the fixed end is electrically connected with a conductor of the cable, the shield member is fixedly mounted on the charging socket body, a connection structure is provided on the charging terminal, and the charging terminal is detachably connected with the detachable structure via the connection structure, a front end of the charging socket body is provided with a cavity within which the detachable structure is provided, the charging terminal is inserted into the cavity via an opening of the cavity and is detachably connected with the detachable structure via the connection structure, wherein a rear end of the charging terminal is provided with a disassembly portion, and a cross-section shape of the disassembly portion is a flat shape.

### SUMMARY

The present invention is defined by the independent claim. Further embodiments are set forth in the dependent claims. Any references to inventions or embodiments not falling within the scope of the independent claims are to be interpreted as examples useful for understanding the invention. A purpose of the present disclosure is to provide a charging socket, to solve the problem that when an electric connection inside the charging socket is faulty, replacing an internal connector needs to disassemble the entire charging socket, resulting in difficult repair and long repair time.

The purpose of the present disclosure may be realized by using the following technical solution:

The present disclosure provides a charging socket, including: a charging socket body, a charging terminal, a charging adapter and a cable, wherein the charging adapter includes a detachable structure and a fixed end which are connected in sequence, the fixed end is electrically connected with a conductor of the cable, the charging adapter is fixedly mounted on the charging socket body, a connection structure is provided on the charging terminal, and the charging terminal is detachably connected with the detachable structure via the connection structure.

In some embodiments, a front end of the charging socket body is provided with a cavity within which the detachable structure is provided, the charging terminal is inserted into an opening of the cavity and is detachably connected with the detachable structure via the connection structure.

In some embodiments, the charging adapter and the conductor are connected or formed integrally in a crimping or welding mode.

In some examples, the welding mode includes one or more of resistance welding, friction welding, ultrasonic welding, arc welding, laser welding, electron beam welding and pressure diffusion welding.

In some embodiments, the number of the charging adapters is 2 to 36.

In some embodiments, the charging socket body is provided with a slot, the charging adapter is provided with a groove, the slot and the groove coordinate to prevent the charging adapter from moving along an axis direction.

In some embodiments, the slot is provided with a wire outlet via which the cable passes through the slot.

In some embodiments, the wire outlet is arranged towards a front and rear direction of the charging socket body.

In some embodiments, an orientation direction of the wire outlet is at a certain angle with the front and rear direction of the charging socket body.

In some embodiments, a sealing ring is provided between the charging adapter and the charging socket body.

In some embodiments, a rear end of the charging terminal is provided with a disassembly portion, and a cross-section shape of the disassembly portion is a flat shape or a polygon.

In some embodiments, the detachable structure is a bolt structure, the connection structure is a threaded structure, and a torque range of a threaded connection between the detachable structure and the connection structure is 0.1N • m to 30 N•m.

In some embodiments, the detachable structure is a clasp, the connection structure is a slot, or the detachable structure is a slot, the connection structure is clasp, a connection force range of a clamping connection between the detachable structure and the connection structure is 5N to 500 N.

In some examples, a connection force range of a clamping connection between the detachable structure and the connection structure is 15N to 300 N.

In some embodiments, the charging socket body further includes a fixed portion that prevents the charging adapter from rotating around an axis.

In some embodiments, a threaded hole is provided on the charging socket body, a connection hole is provided on the fixed portion, the fixed portion further includes a screw which is in a threaded connection with the threaded hole by passing through the connection hole, and the fixed portion is fixedly connected on the charging socket body.

In some embodiments, the number of the charging terminals is 2 to 36.

In some embodiments, a material of the cable is one of copper or copper alloy or aluminum or aluminum alloy.

In some embodiments, a temperature sensor and a control board are provided on the charging socket body, the temperature sensor is electrically connected with the control board via a data line.

In some embodiments, the temperature sensor is in a contacting connection with the charging adapter.

In some embodiments, the temperature sensor and the charging adapter are formed integrally.

In some embodiments, the control board is a circuit board, and the circuit board has a built-in control logic circuit.

In some embodiments, the temperature sensor is an NTC temperature sensor or a PTC temperature sensor.

In some embodiments, the cross-sectional area of the connection structure of the charging terminal is less than or equal to the cross-sectional area of the detachable structure.

In some embodiments, a first plating layer is provided on the charging terminal.

In some embodiments, a material of the first plating layer contains one or more of gold, silver, nickel, tin, tin-lead alloy, zinc, silver-antimony alloy, palladium, palladium-nickel alloy, graphite-silver, graphene-silver and silver-gold-zirconium alloy.

In some embodiments, a surface of the detachable structure is provided with a second plating layer.

In some embodiments, a material of the second plating layer contains one or more of gold, silver, nickel, tin, tin-lead alloy, zinc, silver-antimony alloy, palladium, palladium-nickel alloy, graphite-silver, graphene-silver and silver-gold-zirconium alloy.

In some embodiments, a material of the second plating layer is different from that of the first plating layer.

The present disclosure further provides a vehicle, including the charging socket as described above.

Features and advantages of the present disclosure are:
The charging adapter is capable of detachably connecting the charging terminal with the charging socket body and electrically connecting with the cable. In this way, when a relevant connecting element inside the charging socket is damaged, the charging terminal and the charging adapter may be removed in sequence, and a faulty charging terminal is replaced without removing the entire charging socket and replacing the cable, which greatly reduces the work intensity and saves the repair time.

### BRIEF DESCRIPTION OF DRAWINGS

In order to describe technical solutions in the embodiments of the present disclosure more clearly, the drawings required for use in the embodiments are briefly introduced below. Obviously, the drawings in the following description are only some embodiments of the present disclosure. Persons skilled in the art can further obtain other drawings based on these drawings under the premise that they do not pay inventive labor.
FIG. 1 is a side view of a charging socket body in the embodiments of the present disclosure;
FIG. 2 is a structural diagram of the embodiments of the present disclosure;
FIG. 3 is a front view of a charging terminal in the embodiments of the present disclosure;
FIG. 4 is a right view of a charging terminal in the embodiments of the present disclosure;
FIG. 5 is a structural diagram of a charging terminal in the embodiments of the present disclosure;
FIG. 6 is a top view of a charging adapter in the embodiments of the present disclosure;
FIG. 7 is a front view of a charging adapter in the embodiments of the present disclosure.

### [Description of reference signs]:

- 1.: charging socket body;
- 2.: charging terminal;
- 3.: charging adapter;
- 31.: detachable structure;
- 32.: fixed end;
- 4.: cable;
- 5.: slot;
- 6.: groove;
- 7.: sealing ring;
- 8.: disassembly portion;
- 9.: connection structure;
- 11.: wire outlet.

### DETAILED DESCRIPTION OF EMBODIMENTS OF THE DISCLOSURE

The technical solutions in the embodiments of the present disclosure will be described clearly and completely with reference to the drawings in the embodiments of the present disclosure.

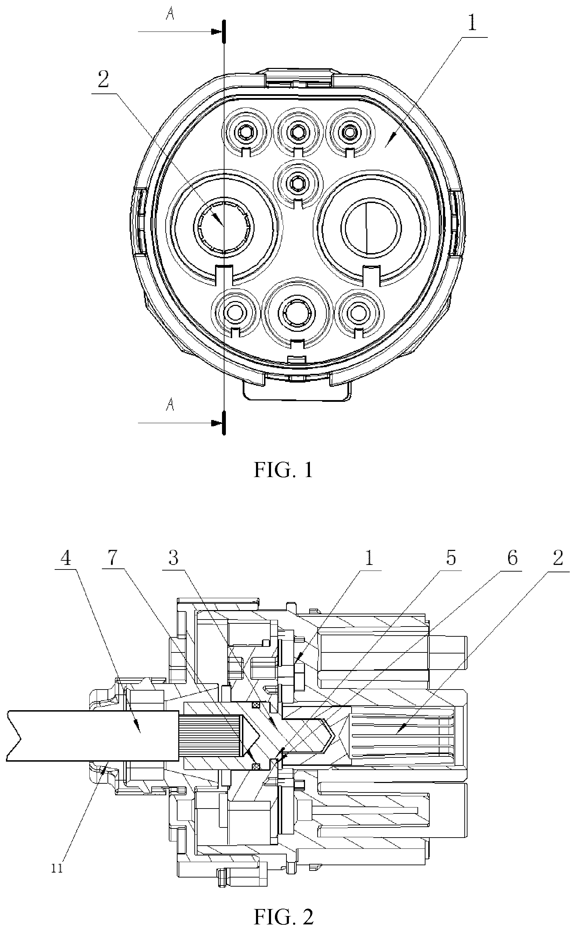

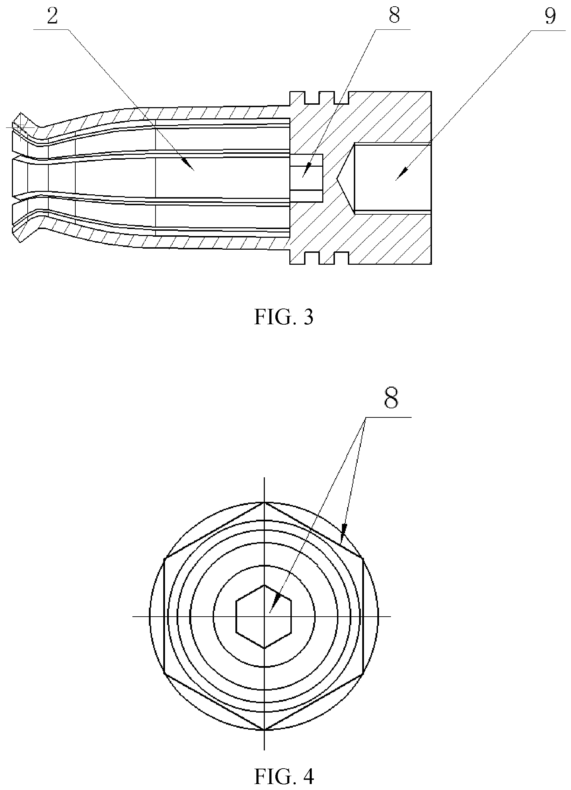

The present disclosure provides a charging socket, as shown in FIGS. 1-2, including: a charging socket body 1, a charging terminal 2, a charging adapter 3 and a cable 4, in which the charging adapter 3 includes a detachable structure 31 and a fixed end 32 which are connected in sequence, the fixed end 32 is electrically connected with a conductor of the cable 4, the charging adapter 3 is fixedly mounted on the charging socket body 1, as shown in FIG. 3, a connection structure 9 is provided on the charging terminal 2, and the charging terminal 2 is detachably connected with the detachable structure 31 via the connection structure 9.

In a charging socket of the prior arts, the charging terminal 2 is a device that is often plugged and unplugged with the charging socket body 1, and is also a main part for conducting a charging current. During prolonged, not only frequent plugging and unplugging operations result in deformation and coating damage of the electrical connection device 22, or even ignition and melting of the electrical connection device 22 as a result of an excessive current, thus the electrical connection device 22 cannot achieve functions thereof. In addition, the electrical connection device 22, when exposed to an external environment, may be corroded by water or salt in the environment, so that electrical properties of the electrical connection device 22 fail to meet the requirements. Therefore, in the whole charging socket, the charging terminal 2 is the most easily damaged part, but at present, for most of the charging sockets, the charging terminal 2 is fixed on a charging socket body and is connected with a cable 4 by welding. When the charging terminal 2 is damaged, it needs to remove the charging terminal 2 and the cable 4 all from the charging socket body 1 and replace them, and in serious cases, the whole charging socket body 1 needs to be replaced. Tedious repair operations, long repair time and high repair cost are one of the main problems restricting the development of the charging vehicle industry at present.

The present disclosure provides a charging socket, when the charging terminal 2 is damaged, just remove the charging terminal 2 from the charging socket body 1, install after the charging terminal 2 is replaced, without removing the entire charging socket body 1 and replacing the cable 4, which solves the technical problem that the repair operation is more cumbersome when the charging terminal 2 of the charging socket body 1 is damaged.

A front end of the charging socket body 1 is provided with a cavity within which the detachable structure 31 is provided, the charging terminal 2 is inserted into an opening of the cavity and is detachably connected with the detachable structure 31 via the connection structure 9.

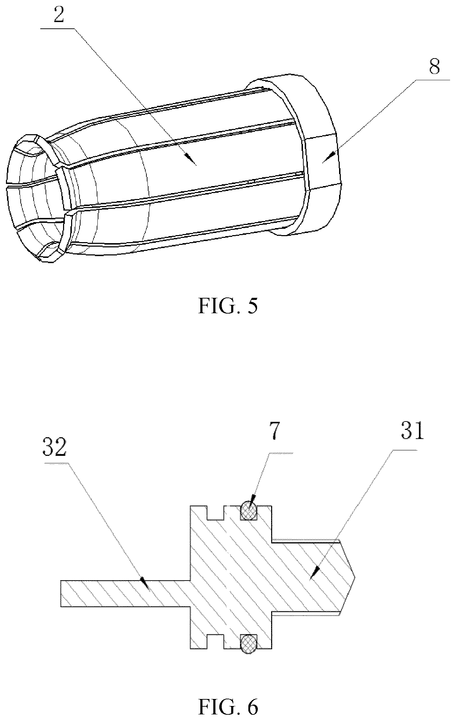

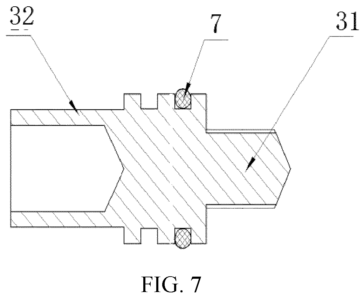

In some embodiments, the charging adapter 3 and the conductor are connected or formed integrally in a crimping or welding mode. Exemplarily, as shown in FIG. 6, the fixed end 32 of the charging adapter 3 is a solid body, a conductor of the cable 4 may be wrapped around an outer side of the fixed end of the solid body, and they are welded together. As shown in FIG. 7, the fixed end 32 of the charging adapter 3 is a hollow body, a conductor of the cable 4 may be inserted into the hollow body of the fixed end, and they are crimped together.

In some examples, the welding mode includes one or more of resistance welding, friction welding, ultrasonic welding, arc welding, laser welding, electron beam welding and pressure diffusion welding.

The ultrasonic welding mode refers to that a high-frequency vibration wave is transmitted to surfaces of two objects to be welded, and in case of pressurization, the surfaces of the two objects are rubbed against each other to form fusion between molecular layers.

The resistance welding mode refers to a method in which a strong current is used to pass through a contact point between an electrode and a workpiece, heat is generated by a contact resistance to achieve welding.

The arc welding mode refers to that using an electric arc as a heat source, a physical phenomenon of air discharge is used to convert electric energy into thermal energy and mechanical energy required for welding, so as to achieve the purpose of connecting metals, main methods include welding rod arc welding, submerged arc welding, gas shielded welding and so on.

The pressure welding mode refers to a method in which a pressure is applied to a weldment to enable an adjoining face to contact closely to produce a certain plastic deformation, so as to complete welding.

The electron beam welding mode refers to that a welded face placed in vacuum or non-vacuum is bombarded using accelerated and focused electron beams, so that welding is achieved by melting a workpiece to be welded.

The laser welding mode refers to a high-efficient precision welding method using a laser beam with a high energy density as a heat source.

The friction welding mode refers to a method in which by using heat generated by friction of a workpiece contact face as a heat source, a workpiece is welded by generation of plastic deformation under a pressure.

In some embodiments, the number of the charging adapters 3 is 2 to 36. Charging may be simplified using only two cables 4, other circuits may be integrated into the charging device or battery. At the same time, the number of the charging terminals 2 may be the same as the number of the charging adapters 3, the number of the charging terminals 2 is also 2 to 36.

In some embodiments, the charging socket body 1 is provided with a slot 5, the charging adapter 3 is provided with a groove 6, the slot 5 and the groove 6 coordinate to prevent the charging adapter 3 from moving along an axis direction.

According to the invention, the charging socket body 1 is provided with a wire outlet 11 via which the cable 4 passes through the charging socket body 1, to facilitate the insertion and assembly of the cable 4, and an installation position of the cable 4 may be sealed to ensure water resistance of the charging socket body 1, which is more convenient to operate and improves assembly efficiency.

The wire outlet 11 may define a wire-out position and a wire-out direction of the cable 4. In an embodiment, the wire outlet 11 is arranged towards a lateral direction of the charging socket body 1. The wire outlet 11 is provided in an up and down direction, the cable 4 comes out in the up and down direction, and the cable 4 may be bent. In an embodiment, the wire outlet 11 is provided in a horizontal direction, the cable 4 comes out in the horizontal direction, and the cable 4 may be bent. Further, the charging socket body 1 is provided with at least two sets of cable outlets, one set is provided in an up and down direction, and the other set is provided in a horizontal direction. In use, one of the sets may be selected to arrange the cable 4, to facilitate a wire-out direction of the cable 4 to fit with an installation environment.

In an embodiment, an orientation direction of the wire outlet 11 is at a certain angle with the front and rear direction of the charging socket body 1. In an installation environment of the charging socket body 1, a wire-out direction of the charging socket body 1 may not be behind or lateral to the charging socket body 1, it may also be at a certain angle to an axial direction of the charging socket body 1, the orientation direction of the wire outlet 11 can be directly set to a direction required by wire-out of the cable 4 in the installation environment, avoid bending the cable 4 again. During installation, it can also be directly installed to avoid a situation in which the cable 4 cannot be bent and installed due to higher hardness.

A sealing ring 7 is provided between the charging adapter 3 and the charging socket body 1. As shown in FIGS. 6 and 7, the sealing ring 7 can play a sealing role to prevent water or dust from entering between the charging adapter 3 and the charging socket body 1.

Further, a rear end of the charging terminal 2 is provided with a disassembly portion 8, as shown in FIGS. 4 and 5, and a cross-section shape of the disassembly portion 8 is a flat shape or a polygon. The disassembly portion 8 can facilitate installation of the charging terminal 2. Staff can rotate the charging terminal 2 to install the charging terminal 2 by contacting the disassembling portion 8.

In some embodiments, the detachable structure is a bolt structure, the connection structure is a threaded structure, and a torque range of a threaded connection between the detachable structure 31 and the connection structure 9 is 0.1N • m to 30 N•m.

In order to verify the influence of a torque range of a threaded connection between the detachable structure 31 and the connection structure 9 on the electrical connection performance of the charging terminal 2 and the charging adapter 3, the inventor selects to use the same charging terminal 2 and charging adapter 3, tightens them together using different torques, and respectively tests a contact resistance between the charging terminal 2 and the charging adapter 3, and a connection between the charging terminal 2 subjected to a vibration test and the charging adapter 3. A test result is shown in Table 1.

A testing method for a contact resistance between the charging terminal 2 and the charging adapter 3 is to use a micro-resistance measuring instrument, place one end of measuring ends of the micro-resistance measuring instrument on the charging adapter 3, place one end thereof on the charging terminal 2, positions for placement for each measurement are same, then a reading of the contact resistance on the micro-resistance measuring instrument is read. In this example, it is unqualified if the contact resistance is greater than 1 mΩ.

In the vibration test, a connected sample is placed on a vibration test table, and subjecting them to 300 vibration cycles, with vibrations applied in six directions at a frequency of 100Hz and an acceleration of 40m/s² in one direction during each cycle, and then whether the charging terminal 2 and the charging adapter 3 have a loosening phenomenon is observed. In this example, it is unqualified if the detachable structure 31 and the connection structure 9 are loose, or damaged when being installed.

**Table 1 Influence of different torques on a contact resistance and a connection**

| Torque of the detachable structure and the connection structure (N·m) | | | | | | | | | | | | | |
|---|---|---|---|---|---|---|---|---|---|---|---|---|---|
| 0.01 | 0.05 | 0.1 | 0.5 | 1 | 3 | 5 | 10 | 15 | 20 | 25 | 30 | 32 | 35 |

| Charging terminal and charging adapter (mΩ) | | | | | | | | | | | | | |
|---|---|---|---|---|---|---|---|---|---|---|---|---|---|
| 1.16 | 1.05 | 0.96 | 0.94 | 0.91 | 0.87 | 0.85 | 0.83 | 0.80 | 0.77 | 0.74 | 0.75 | 0.75 | 0.75 |

| Connection between the charging terminal and the charging adapter | | | | | | | | | | | | | |
|---|---|---|---|---|---|---|---|---|---|---|---|---|---|
| Loo se | Loo se | Not loos e | Not loos e | Not loos e | Not loos e | Not loos e | Not loos e | Not loos e | Not loos e | Not loos e | Not loos e | Not loos e | Not loos e |

As can be seen from the above Table 1, when a torque value of a threaded connection between the detachable structure 31 and the connection structure 9 is less than 0.1N•m, a value of a contact resistance between the charging terminal 2 and the charging adapter 3 is unqualified, and the detachable structure 31 and the connection structure 9 are loose after a vibration test, thus the inventor sets a minimum value of a torque range of the threaded connection between the detachable structure 31 and the connection structure 9 to be 0.1N•m. When the torque value of a threaded connection between the detachable structure 31 and the connection structure 9 is greater than 30N•m, the contact resistance cannot be further reduced, therefore the inventor determines a torque range of the threaded connection between the detachable structure 31 and the connection structure 9 to be 0.1N•m to 30N•m.

In some embodiments, the detachable structure 31 is a clasp, the connection structure 9 is a slot, or the detachable structure 31 is a slot, the connection structure 9 is clasp, a connection force range of a clamping connection between the detachable structure 31 and the connection structure 9 is 5N to 500 N.

In order to test the influence of a connection force of a clamping connection between the detachable structure 31 and the connection structure 9 on conductivity, the inventor selects to use 10 pairs of detachable structures 31 and connection structures 9 having the same shape and the same expansion seam width to carry out a connection force test, a test result is shown in Table 2.

**Table 2 Influence of different connection forces on conductivity**

| | | | | | | | | | | |
|---|---|---|---|---|---|---|---|---|---|---|
| Conne ction forces (N) | 40 | 50 | 80 | 100 | 200 | 300 | 400 | 500 | 520 | 550 |
| Condu ctivity | 99.5% | 99.6 % | 99.6% | 99.6% | 99.6% | 99.7% | 99.7% | 99.8% | 99.8% | 99.8% |
| Conne | 3 | 4 | 5 | 6 | 8 | 10 | 15 | 20 | 25 | 30 |
| ction forces (N) | | | | | | | | | | |
| Condu ctivity | 97.8% | 98.4 % | 99.1% | 99.1% | 99.2% | 99.3% | 99.4% | 99.4% | 99.4% | 99.5% |

As can be known from Table 2, when a connection force is less than 5N or greater than 500N, the conductivity decreases significantly and cannot meet an actual demand. When the connection force is greater than 5N and less than 500N, a conductive property is better, while when the connection force is greater than 15N and less than 300N, the conductive property is also excellent. However, after the connection force is greater than 300N, an increase of the conductivity is not obvious, and the processing is difficult, so the inventor considers that a preferred connection force is 15N-300N.

In some embodiments, the charging socket body 1 further includes a fixed portion that prevents the charging adapter 3 from rotating around an axis.

A threaded hole is provided on the charging socket body, a connection hole is provided on the fixed portion, the fixed portion further includes a screw which is in a threaded connection with the threaded hole by passing through the connection hole, and the fixed portion is fixedly connected on the charging socket body.

In some embodiments, a material of the cable 4 is one of copper or copper alloy or aluminum or aluminum alloy. Due to high voltages and large currents, cables of electric vehicles need to use wires with large wire diameters for current conduction. A copper conductor material has good conductive property and good ductility, and is preferred as a cable conductor material. However, with an increasing price of copper, the material cost of using copper as a wire will become higher and higher. To this end, people began to look for alternatives of the metal copper to reduce the cost. A content of metallic aluminum in the earth's crust is about 7.73%, after the refining technology is optimized, the price is relatively low, and compared with copper, aluminum is lighter in weight, the conductivity is second only to copper, and aluminum can replace part of copper in the field of electrical connection. Therefore, it is a developing trend to replace copper with aluminum in the field of automotive electrical connection.

A temperature sensor and a control board are provided on the charging socket body 1, the temperature sensor is electrically connected with the control board via a data line.

Further, the temperature sensor is in a contacting connection with the charging adapter 3.

More further, the temperature sensor and the charging adapter 3 are formed integrally. A design of forming integrally is more convenient to install, and a measured temperature value is more accurate.

The temperature sensor transmits a temperature signal to the control board to monitor a temperature of the charging adapter 3 and avoid a damage caused by a too high temperature. In addition, the temperature sensor may be directly connected with the charging adapter 3 and obtain a temperature value of the charging adapter 3 in real time, and passes the same to the control board. By adjusting a charging current of the control board, the temperature value of the charging adapter 3 is controlled, so that the measurement accuracy of a temperature of the charging adapter 3 is close to or equal to a theoretical absolute value, it has extremely high detection accuracy and a fast output capacity.

Further, the control board is a circuit board in which a control logic circuit is provided. Through the control logic circuit, when a detection temperature of the temperature sensor is higher than a set temperature, the control board issues a warning message to realize real-time temperature monitoring; and when the detection temperature of the temperature sensor exceeds the set temperature by a certain value, a charging system is controlled to be disconnected automatically, so as to avoid a danger caused by a too high temperature.

Specifically, the temperature sensor may be an NTC temperature sensor or a PTC temperature sensor. Advantages of using these two temperature sensors are that they are small in volume and can measure a gap which cannot be measured by other thermometers; they are easy to use, a resistance value may be arbitrarily selected between 0.1Ω and 100 0kΩ; they are easily machined into complex shapes, may be produced in mass, have good stability and a strong overload capacity, and are suitable for a product such as an adapter which requires a small volume and stable performance.

The cross-sectional area of the connection structure 9 of the charging terminal 2 is less than or equal to the cross-sectional area of the detachable structure 31. It can ensure that a resistance value of a resistance at a connection is not too large.

In some preferred embodiments, a first plating layer is provided on the charging terminal 2.

A material of the first plating layer contains one or more of gold, silver, nickel, tin, tin-lead alloy, zinc, silver-antimony alloy, palladium, palladium-nickel alloy, graphite-silver, graphene-silver and silver-gold-zirconium alloy.

The charging terminal 2 will oxidize with oxygen and water during use, hence one or more inactive metals are needed as a plating layer to extend a service life of the terminal. In addition, for a metal contact that need to be inserted and removed frequently, a better wear-resistant metal is also needed as a plating layer, which can greatly increase a service life of the contact. Contacts need good conductive property, the electrical conductivity and stability of the above metals are better than copper or copper alloy, which can make the terminal obtain better electrical performance and a longer service life.

Further, a surface of the detachable structure is provided with a second plating layer.

Exemplarily, a material of the second plating layer contains one or more of gold, silver, nickel, tin, tin-lead alloy, zinc, silver-antimony alloy, palladium, palladium-nickel alloy, graphite-silver, graphene-silver and silver-gold-zirconium alloy.

In order to demonstrate the influence of different plating layer materials on the overall performance of the charging terminal 2, the inventor uses samples of the charging terminal 2 with the same specification and material and different plating layer materials, and uses adapting plug-ins with the same specification to do a series of tests on the number of insertion and removal times and corrosion resistance time, and in order to prove the advantages and disadvantages of a selected material and other commonly used electroplating materials, the inventor also selects tin, nickel and zinc as plating materials for an experiment. An experiment result is shown in the following Table 3.

For the number of insertion and removal times in the following Table 3, the charging terminal 2 is fixed on an experiment table respectively, a mechanical device is used to make the terminal simulate insertion and removal, and after every 100 insertions and removals, it is necessary to stop to observe a damage situation of a surface plating layer of the charging terminal 2. If the surface plating layer of the terminal is scratched and the material of the terminal is exposed, the experiment will be stopped and the number of insertion and removal times at that time will be recorded. In this example, it is unqualified if the number of insertion and removal times is less than 8000.

For the corrosion resistance time test in the following Table 3, the charging terminal 2 is put into a salt mist spraying test box, salt mist is sprayed on each position of the terminal, the terminal is taken out and cleaned every 20 hours, the surface corrosion of the terminal is observed, constituting one cycle, until the corrosion area of the terminal surface is greater than 10% of the total area, the test is stopped, and the number of cycles at that time is recorded. In this example, it is unqualified if the number of cycles is less than 80.

As can be seen from the following Table 3, when a plating layer material of the charging terminal 2 is a commonly used metal such as tin, nickel and zinc, an experimental result is far inferior to other selected metals. Although the plating layer nickel is qualified in the experiment for the number of insertion and removal times, it is not much more than that, and it is not qualified in the salt mist spraying experiment. An experimental result by selecting other metals is more than a standard value, and the performance is relatively stable. Therefore, the inventor selects a plating layer material containing one or more of gold, silver, silver-antimony alloy, graphite-silver, graphene-silver, palladium-nickel alloy, tin-lead alloy or silver-gold-zirconium alloy.

**Table 3 Influence of different plating layer materials on the number of insertion and removal times and corrosion resistance of the charging terminal**

| Different plating layer materials | | | | | | | | | | | |
|---|---|---|---|---|---|---|---|---|---|---|---|
| gold | silver | silver -anti many alloy | graph ite-sil ver | graph ene-si lver | silver -gold-zirco nium alloy | tin | nickel | pallad ium | pallad ium-n ickel alloy | tin-le ad alloy | zinc |
| Number of insertion and removal times | | | | | | | | | | | |
| 12400 | 11900 | 12200 | 12000 | 12700 | 12100 | 8200 | 8400 | 11100 | 12000 | 10000 | 8500 |
| | | | Number of cycles of corrosion resistance test | | | | | | | | |
| 131 | 128 | 121 | 130 | 127 | 131 | 82 | 88 | 110 | 120 | 111 | 88 |

A material of the second plating layer is different from that of the first plating layer. According to different needs, different materials are selected to control the cost, and a material with a lower price is used as a plating layer in some environments where a demand is not high. Different plating layers may be selected according to needs, for example according to a need, a combination with higher conductivity may be selected, or a combination with better corrosion resistance is selected, or a combination that is most suitable for an actual working environment is selected by comprehensively taking various factors into account.

The present disclosure further discloses an vehicle, including the charging socket as described above. Not only the production and manufacturing process is simple, the processing is convenient, the processing working hours for a charging socket are greatly reduced; and in a process of using the vehicle, if only the electric connection device of the charging socket is damaged, there is no need to remove the entire charging socket and scrap the cable, only the charging terminal 2 needs to be removed, the repair craft is simple and easy to operate, working hours consumed are short, the repair cost is low, and the cost of the vehicle disclosed in the present disclosure and the maintenance cost are greatly reduced.

The above are only several embodiments of the present disclosure, persons skilled in the art may make various changes or variations to the embodiments of the present disclosure according to the contents disclosed in the application documents.

## Claims

1. A charging socket, comprising: a charging socket body (1), a charging terminal (2), a charging adapter (3) and a cable (4), wherein the charging adapter (3) comprises a detachable structure (31) and a fixed end (32) which are connected in sequence, the fixed end (32) is electrically connected with a conductor of the cable (4), the charging adapter (3) is fixedly mounted on the charging socket body (1), a connection structure (9) is provided on the charging terminal (2), and the charging terminal (2) is detachably connected with the detachable structure (31) via the connection structure (9), wherein the charging adapter (3) is a conductive component that detachably connects the charging terminal (2) to the charging socket body (1) and electrically connects with the cable (4), a front end of the charging socket body (1) is provided with a cavity within which the detachable structure (31) is provided, the charging terminal (2) is inserted into the cavity via an opening of the cavity and is detachably connected with the detachable structure (31) via the connection structure (9),
a front end of the charging terminal (2) is provided with a hole for insertion and removal, and an end face of a rear end of the charging terminal (2) facing the front end is provided with a slot communicating with the hole,
the rear end of the charging terminal (2) is provided with a disassembly portion (8), and a cross-section shape of the disassembly portion (8) is a flat shape or a polygon,
**characterized in that** the disassembly portion (8) comprises a first disassembly portion, and a second disassembly portion, and the first disassembly portion is located on the outer side face of the rear end of the charging terminal (2), the second disassembly portion is the inner wall of the slot;
the charging socket body (1) is provided with at least two sets of wire outlet (11) via which the cable (4) passes through the charging socket body (1), one set is provided in an up and down direction, and the other set is provided in a horizontal direction

2. The charging socket according to claim 1, wherein the charging adapter (3) and the conductor are connected or formed integrally in crimping or welding.

3. The charging socket according to claim 1, wherein the number of the charging adapters (3) is 2 to 36; or
the charging socket body (1) is provided with a slot (5), the charging adapter (3) is provided with a groove (6), the slot (5) and the groove (6) coordinate to prevent the charging adapter (3) from moving along an axis direction; or
a sealing ring (7) is provided between the charging adapter (3) and the charging socket body (1); or
the detachable structure (31) is a bolt structure, the connection structure (9) is a threaded structure, and a torque range of a threaded connection between the detachable structure (31); or
the number of the charging terminals (2) is 2 to 36; or
a material of the cable (4) is one of copper or copper alloy or aluminum or aluminum alloy; or
the cross-sectional area of the connection structure (9) of the charging terminal (2) is less than or equal to the cross-sectional area of the detachable structure (31); or
a surface of the detachable structure (31) is provided with a second plating layer;
a material of the second plating layer contains one or more of gold, silver, nickel, tin, tin-lead alloy, zinc, silver-antimony alloy, palladium, palladium-nickel alloy, graphite-silver, graphene-silver and silver-gold-zirconium alloy; or
a first plating layer is provided on the charging terminal (2), a surface of the detachable structure (31) is provided with a second plating layer, a material of the second plating layer is different from that of the first plating layer.

4. The charging socket according to claim 1, wherein the detachable structure (31) is a clasp, the connection structure (9) is a slot (5), or the detachable structure (31) is a slot (5), the connection structure (9) is clasp, a connection force range of a clamping connection between the detachable structure (31).

5. The charging socket according to claim 1, wherein the charging socket body (1) further comprises a fixed portion that prevents the charging adapter (3) from rotating around an axis.

6. The charging socket according to claim 5, wherein a threaded hole is provided on the charging socket body (1), a connection hole is provided on the fixed portion, the fixed portion further comprises a screw which is in a threaded connection with the threaded hole by passing through the connection hole, and the fixed portion is fixedly connected on the charging socket body (1).

7. The charging socket according to claim 1, wherein a temperature sensor and a control board are provided on the charging socket body,
the control board is a circuit board, and the circuit board has a built-in control logic circuit; or
the temperature sensor is an NTC temperature sensor or a PTC temperature sensor.

8. The charging socket according to claim 1, wherein a first plating layer is provided on the charging terminal (2);
a material of the first plating layer contains one or more of gold, silver, nickel, tin, tin-lead alloy, zinc, silver-antimony alloy, palladium, palladium-nickel alloy, graphite-silver, graphene-silver and silver-gold-zirconium alloy.

9. An vehicle, comprising the charging socket according to any one of claims 1 to 8

## Patentansprüche

1. Ladebuchse, aufweisend: einen Ladebuchsenkörper (1), einen Ladeanschluss (2), einen Ladeadapter (3) und ein Kabel (4), wobei der Ladeadapter (3) eine abnehmbare Struktur (31) und ein festes Ende (32) aufweist, die nacheinander miteinander verbunden sind, das feste Ende (32) elektrisch mit einem Leiter des Kabels (4) verbunden ist, der Ladeadapter (3) fest am Ladebuchsenkörper (1) angebracht ist, eine Verbindungsstruktur (9) am Ladeanschluss (2) vorgesehen ist und der Ladeanschluss (2) über die Verbindungsstruktur (9) lösbar mit der abnehmbaren Struktur (31) verbunden ist, wobei der Ladeadapter (3) ein leitfähiges Bauteil ist, das den Ladeanschluss (2) mit dem Ladebuchsenkörper (1) verbindet und elektrisch mit dem Kabel (4) verbunden ist, ein vorderes Ende des Ladebuchsenkörpers (1) mit einem Hohlraum versehen ist, in dem die abnehmbare Struktur (31) vorgesehen ist, der Ladeanschluss (2) über eine Öffnung des Hohlraums in diesen eingeführt und über die Verbindungsstruktur (9) lösbar mit der abnehmbaren Struktur (31) verbunden ist,
ein vorderes Ende des Ladeanschlusses (2) mit einer Öffnung zum Einführen und Entnehmen versehen ist und eine dem vorderen Ende zugewandte Stirnfläche eines hinteren Endes des Ladeanschlusses (2) mit einem Schlitz versehen ist, der mit der Öffnung in Verbindung steht,
das hintere Ende des Ladeanschlusses (2) mit einem Demontageabschnitt (8) versehen ist und die Querschnittsform des Demontageabschnitts (8) eine flache Form oder ein Vieleck aufweist,
**dadurch gekennzeichnet, dass** der Demontageabschnitt (8) einen ersten Demontageabschnitt und einen zweiten Demontageabschnitt aufweist, und der erste Demontageabschnitt an der äußeren Seitenfläche des hinteren Endes des Ladeanschlusses (2) angeordnet ist, wobei der zweite Demontageabschnitt die Innenwand des Schlitzes bildet;
der Ladebuchsenkörper (1) mit mindestens zwei Sätzen von Kabelausgängen (11) versehen ist, durch die das Kabel (4) den Ladebuchsenkörper (1) durchläuft, wobei ein Satz in vertikaler Richtung und der andere Satz in horizontaler Richtung vorgesehen ist.

2. Ladebuchse nach Anspruch 1, bei der der Ladeadapter (3) und der Leiter durch Crimpen oder Schweißen verbunden oder einstückig ausgebildet sind.

3. Ladebuchse nach Anspruch 1, bei der die Anzahl der Ladeadapter (3) 2 bis 36 beträgt; oder
der Ladebuchsenkörper (1) mit einem Schlitz (5) versehen ist, der Ladeadapter (3) mit einer Nut (6) versehen ist, wobei der Schlitz (5) und die Nut (6) zusammenwirken, um eine Bewegung des Ladeadapters (3) entlang einer Achsenrichtung zu verhindern; oder
ein Dichtungsring (7) zwischen dem Ladeadapter (3) und dem Ladebuchsenkörper (1) vorgesehen ist; oder
die abnehmbare Struktur (31) eine Bolzenstruktur ist, die Verbindungsstruktur (9) eine Gewindestruktur ist und ein Drehmomentbereich einer Gewindeverbindung zwischen der abnehmbaren Struktur (31) vorliegt; oder
die Anzahl der Ladeanschlüsse (2) 2 bis 36 beträgt; oder
ein Material des Kabels (4) Kupfer oder eine Kupferlegierung oder Aluminium oder eine Aluminiumlegierung ist; oder
die Querschnittsfläche der Verbindungsstruktur (9) des Ladeanschlusses (2) kleiner oder gleich der Querschnittsfläche der abnehmbaren Struktur (31) ist; oder
eine Oberfläche der abnehmbaren Struktur (31) mit einer zweiten Beschichtungsschicht versehen ist;
ein Material der zweiten Beschichtungsschicht eines oder mehrere der folgenden Elemente enthält: Gold, Silber, Nickel, Zinn, eine Zinn-Blei-Legierung, Zink, eine Silber-Antimon-Legierung, Palladium, eine Palladium-Nickel-Legierung, Graphit-Silber, Graphen-Silber und eine Silber-Gold-Zirkonium-Legierung; oder
eine erste Beschichtungsschicht auf dem Ladeanschluss (2) vorgesehen ist, eine Oberfläche der abnehmbaren Struktur (31) mit einer zweiten Beschichtungsschicht versehen ist, wobei sich das Material der zweiten Beschichtungsschicht von dem der ersten Beschichtungsschicht unterscheidet.

4. Ladebuchse nach Anspruch 1, bei der die abnehmbare Struktur (31) ein Verschluss ist, die Verbindungsstruktur (9) ein Schlitz (5) ist, oder die abnehmbare Struktur (31) ein Schlitz (5) ist, die Verbindungsstruktur (9) ein Verschluss ist, wobei ein Verbindungs-Kraftbereich einer Klemmverbindung zwischen der abnehmbaren Struktur (31) vorgesehen ist.

5. Ladebuchse nach Anspruch 1, bei der der Ladebuchsenkörper (1) ferner einen feststehenden Abschnitt aufweist, der verhindert, dass sich der Ladeadapter (3) um eine Achse dreht.

6. Ladebuchse nach Anspruch 5, bei der am Ladebuchsenkörper (1) ein Gewindeloch vorgesehen ist, am feststehenden Abschnitt ein Verbindungsloch vorgesehen ist, der feststehende Abschnitt ferner eine Schraube aufweist, die durch das Verbindungsloch hindurch mit dem Gewindeloch in Gewindeverbindung steht, und der feststehende Abschnitt fest mit dem Ladebuchsenkörper (1) verbunden ist.

7. Ladebuchse nach Anspruch 1, bei der am Ladesbuchsenkörper ein Temperatursensor und eine Steuerplatine vorgesehen sind,
die Steuerplatine eine Leiterplatte ist und die Leiterplatte eine integrierte Steuerlogikschaltung aufweist; oder
der Temperatursensor ein NTC-Temperatursensor oder ein PTC-Temperatursensor ist.

8. Ladebuchse nach Anspruch 1, bei der auf dem Ladeanschluss (2) eine erste Beschichtungsschicht vorgesehen ist;
ein Material der ersten Beschichtungsschicht eines oder mehrere der folgenden Elemente enthält: Gold, Silber, Nickel, Zinn, eine Zinn-Blei-Legierung, Zink, eine Silber-Antimon-Legierung, Palladium, eine Palladium-Nickel-Legierung, Graphit-Silber, Graphen-Silber und eine Silber-Gold-Zirkonium-Legierung.

9. Fahrzeug, aufweisend eine Ladebuchse gemäß einem der Ansprüche 1 bis 8.

## Revendications

1. Prise de charge, comprenant: un corps de prise de charge (1), une borne de charge (2), un adaptateur de charge (3) et un câble (4), l'adaptateur de charge (3) comportant une structure amovible (31) et une extrémité fixe (32) reliées l'une à l'autre en série, l'extrémité fixe (32) étant reliée électriquement à un conducteur du câble (4), l'adaptateur de charge (3) étant fixé de manière rigide au corps de prise de charge (1), une structure de connexion (9) est prévue au niveau de la borne de charge (2) et la borne de charge (2) est reliée de manière amovible à la structure amovible (31) par l'intermédiaire de la structure de connexion (9), l'adaptateur de charge (3) étant un composant conducteur qui relie la borne de charge (2) au corps de prise de charge (1) et est relié électriquement au câble (4), une extrémité avant du corps de prise de charge (1) est pourvue d'une cavité dans laquelle est prévue la structure amovible (31), la borne de charge (2) est introduit dans cette cavité par une ouverture de celle-ci et est relié de manière amovible à la structure amovible (31) par l'intermédiaire de la structure de connexion (9),
une extrémité avant de la borne de charge (2) est pourvue d'une ouverture pour l'insertion et le retrait, et une face frontale d'une extrémité arrière de la borne de charge (2), tournée vers l'extrémité avant, est pourvue d'une fente qui communique avec l'ouverture,
l'extrémité arrière de la borne de charge (2) est pourvue d'une partie de démontage (8) et la forme en coupe transversale de la partie de démontage (8) présente une forme plate ou un polygone,
**caractérisé en ce que** la partie de démontage (8) comprend une première partie de démontage et une deuxième partie de démontage, et la première partie de démontage est disposée sur la face latérale extérieure de l'extrémité arrière de la borne de charge (2), la deuxième partie de démontage formant la paroi intérieure de la fente;
le corps de prise de charge (1) est muni d'au moins deux ensembles de sorties de câble (11) à travers lesquelles le câble (4) traverse le corps de prise de charge (1), un ensemble étant prévu dans le sens vertical et l'autre ensemble dans le sens horizontal.

2. Prise de charge selon la revendication 1, dans laquelle l'adaptateur de charge (3) et le conducteur sont reliés par sertissage ou soudage, ou sont formés d'une seule pièce.

3. Prise de charge selon la revendication 1, dans laquelle le nombre d'adaptateurs de charge (3) est compris entre 2 et 36; ou
le corps de prise de charge (1) est muni d'une fente (5), l'adaptateur de charge (3) est muni d'une rainure (6), la fente (5) et la rainure (6) coopérant pour empêcher un mouvement de l'adaptateur de charge (3) le long d'une direction axiale; ou
une bague d'étanchéité (7) est prévue entre l'adaptateur de charge (3) et le corps de prise de charge (1); ou
la structure amovible (31) est une structure à boulon, la structure de connexion (9) est une structure filetée et il existe une plage de couple d'une liaison filetée entre la structure amovible (31); ou
le nombre de bornes de charge (2) est compris entre 2 et 36; ou
le matériau du câble (4) est du cuivre ou un alliage de cuivre, ou de l'aluminium ou un alliage d'aluminium; ou
la section transversale de la structure de connexion (9) de la borne de charge (2) est inférieure ou égale à la section transversale de la structure amovible (31); ou
une surface de la structure amovible (31) est pourvue d'une deuxième couche de revêtement;
un matériau de la deuxième couche de revêtement contient un ou plusieurs des éléments suivants: de l'or, de l'argent, du nickel, de l'étain, un alliage étain-plomb, du zinc, un alliage argent-antimoine, du palladium, un alliage palladium-nickel, du graphite-argent, du graphène-argent et un alliage argent-or-zirconium; ou
une première couche de revêtement est prévue sur la borne de charge (2), une surface de la structure amovible (31) est pourvue d'une deuxième couche de revêtement, le matériau de la deuxième couche de revêtement étant différent de celui de la première couche de revêtement.

4. Prise de charge selon la revendication 1, dans laquelle la structure amovible (31) est un bouchon, la structure de connexion (9) est une fente (5), ou la structure amovible (31) est une fente (5), la structure de connexion (9) est un bouchon, une zone de force de connexion d'une liaison par serrage étant prévue entre la structure amovible (31).

5. Prise de charge selon la revendication 1, dans laquelle le corps de prise de charge (1) comporte en outre une partie fixe qui empêche l'adaptateur de charge (3) de tourner autour d'un axe.

6. Prise de charge selon la revendication 5, dans laquelle (1), un trou fileté est prévu, un trou de liaison est prévu sur la partie fixe, la partie fixe comporte en outre une vis qui, passant à travers le trou de liaison, est en liaison vissée avec le trou fileté, et la partie fixe est reliée de manière fixe au corps de prise de charge (1).

7. Prise de charge selon la revendication 1, dans laquelle un capteur de température et une carte de commande sont prévus sur le corps de la prise de charge,
la carte de commande est une carte de circuit imprimé et la carte de circuit imprimé comporte un circuit logique de commande intégré; ou
le capteur de température est un capteur de température NTC ou un capteur de température PTC.

8. Prise de charge selon la revendication 1, dans laquelle une première couche de revêtement est prévue sur la borne de charge (2);
un matériau de la première couche de revêtement contient un ou plusieurs des éléments suivants: de l'or, de l'argent, du nickel, de l'étain, un alliage étain-plomb, du zinc, un alliage argent-antimoine, du palladium, un alliage palladium-nickel, du graphite-argent, du graphène-argent et un alliage argent-or-zirconium.

9. Véhicule comportant une prise de charge selon l'une des revendications 1 à 8.
